# EUROPÄISCHE PATENTSCHRIFT

(11) **EP 1 435 587 B1**
(45) Veröffentlichungstag und Bekanntmachung des Hinweises auf die Patenterteilung: **27.09.2006**
(21) Anmeldenummer: 03016959.3
(22) Anmeldetag: 25.07.2003
(51) Int. Cl.: G06K 17/00, G06K 13/08

(54) **Vorrichtung zum Bearbeiten kartenförmiger Informationsträger, wie Scheckkarten, Kreditkarten oder Ausweiskarten**
Device for processing card-shaped record carriers, such as cheque cards, credit cards or ID cards
Dispositif de traitement de supports d'information sous forme de cartes, telles que des cartes bancaires, des cartes à crédit ou des cartes d'identité

(30) Priorität: 31.12.2002 DE 10261472
(43) Veröffentlichungstag der Anmeldung: 07.07.2004
(73) Patentinhaber: Atlantic ZeiserGmbH, 78576 Emmingen (DE)
(72) Erfinder: Berndtsson, Anders, 42934 Kullavik (SE)
(74) Vertreter: Kratzsch, Volkhard

(56) Entgegenhaltungen:
- EP-A- 0 602 534
- DE-A1- 10 063 313
- DE-A1- 19 922 873

## Beschreibung

Die Erfindung bezieht sich auf eine Einrichtung zum Bearbeiten kartenförmiger Informationsträger, wie Scheckkarten, Kreditkarten, Ausweiskarten od.dgl. Karten, mit den Merkmalen im Oberbegriff des Anspruchs 1.

Bei einer bekannten Einrichtung dieser Art (DE 100 63 313 A1) ist die jeweilige Übergabevorrichtung im wesentlichen als mechanische Rampe ausgebildet. Hierbei ist die Anordnung so getroffen, dass nur ein intermittierender Betrieb der Einrichtung hinsichtlich der jeweiligen Übergabe und des Transports der Karten möglich ist. Obwohl sich diese bekannte Einrichtung durchaus als vorteilhaft erwiesen hat, sind den möglichen Bearbeitungsgeschwindigkeiten dennoch Grenzen gesetzt.

Der Erfindung liegt die Aufgabe zugrunde, eine Einrichtung der eingangs genannten Art so zu gestalten, dass eine Bearbeitung von Karten in einfacher Weise mit sehr großer Geschwindigkeit möglich ist, und dies bei einfacher Gestaltung der Einrichtung und störungsfreiem Betrieb dieser.

Die Aufgabe ist bei einer Einrichtung der eingangs genannten Art gemäß der Erfindung durch die Merkmale im Anspruch 1 gelöst. Weitere besondere Erfindungsmerkmale und weitere vorteilhafte Ausgestaltungen ergeben sich aus den weiteren Ansprüchen. Die Einrichtung gemäß der Erfindung ist einfach, kostengünstig und ermöglicht einen störungsfreien Betrieb. Da die erste und/oder zweite Übergabevorrichtung ein umlaufend angetriebenes Rad aufweist, ist auf diese Weise die Übergabe der einzelnen Karten von der Bahn zum bewegten Träger und die Übergabe vom bewegten Träger zurück auf die Bahn in kontinuierlicher und schneller Abfolge möglich, insbesondere dann, wenn dies jeweils etwa in tangentialer Ausrichtung der Karten zum jeweiligen Rad geschieht. Auf diese Weise sind für die Bearbeitung der Karten große Geschwindigkeiten erreichbar, die bei bis zu 50 000 Karten pro Stunde und darüber liegen können. Die Gefahr etwaiger Funktionsstörungen besteht nicht.

Weitere Einzelheiten und Vorteile der Erfindung ergeben sich aus der nachfolgenden Beschreibung.

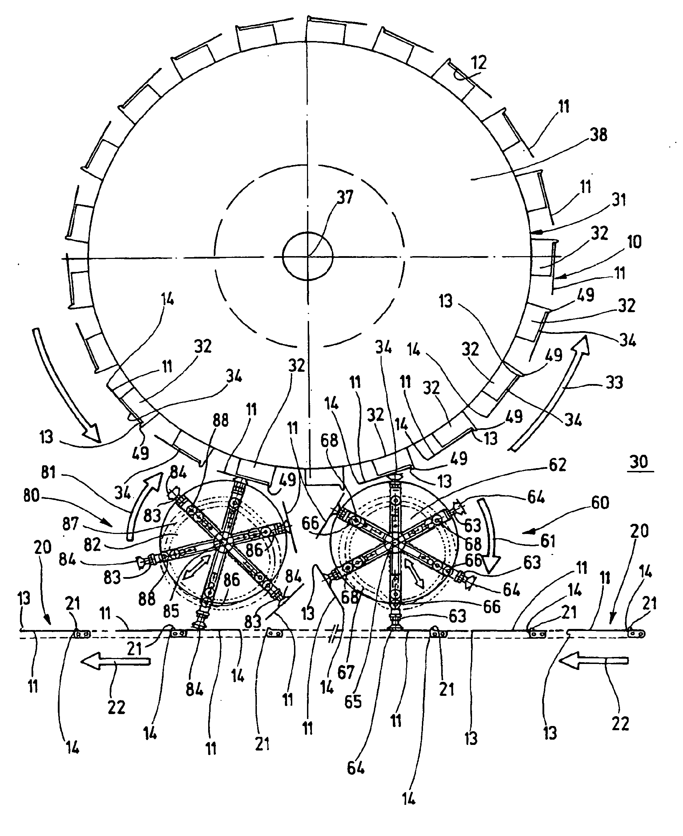

Die Erfindung ist nachfolgend anhand eines der Zeichnung gezeigten Ausführungsbeispieles näher erläutert. Die Zeichnung zeigt eine schematische Seitenansicht von Teilen einer Einrichtung zur Bearbeitung kartenförmiger Informationsträger.

In der Zeichnung ist schematisch ein hier interessierender Teil einer Einrichtung 10 gezeigt, die zum Bearbeiten von kartenförmigen Informationsträgern, wie Scheckkarten, Kreditkarten, Ausweiskarten od.dgl. Karten 11 dient. Der Begriff "Bearbeiten" umfasst dabei jedwede Kommunikation, z.B. die Zuführung von Informationen, das Auslesen von Informationen, das Programmieren od.dgl. Die nur schematisch angedeuteten Karten 11 sind z.B. mit einem integrierten, mindestens einen Speicher aufweisenden Schaltkreis, Chip od.dgl. versehen, der nicht weiter gezeigt ist, wobei die Karte 11 zur kontaktlosen und/oder kontaktbehafteten Kommunikation ausgebildet ist, zumindest in einem Bereich auf der in der Zeichnung angedeuteten Oberseite 12. Der entsprechende, für die Kontaktierung geeignete Bereich auf einer Seite der Karten 11, z.B. auf der Oberseite 12, weist z.B. eine Kontaktfläche mit einer Vielzahl einzelner Kontakte auf, die zum Bearbeiten von Kontaktgebern kontaktiert werden, die dann ihrerseits mit einem Rechnersystem und einer Stromquelle verbunden sind (DE 100 63 313 A1). Für die kontaktlose Kommunikation sind z.B. Kommunikationsmittel vorgesehen, die aus mindestens einer Antenne, insbesondere Spule, gebildet sind, wobei die jeweilige Karte 11 ebenfalls eine jeweilige Antenne, insbesondere Spule, aufweist. Die Bearbeitung derartiger Karten 11, kontaktlos und/oder kontaktierend, insbesondere das Lesen, Programmieren od.dgl., ist generell bekannt und braucht daher im Detail nicht weiter beschrieben zu werden. Dies gilt auch für die entsprechend vorgesehenen Komponenten der Einrichtung 10. Von derartigen Einrichtungen 10 wird verlangt, dass insbesondere angesichts der steigenden Datenmengen, die im Zusammenhang mit derartigen Karten 11 zu bearbeiten sind, insbesondere zu lesen und/oder zu programmieren sind, diese eine möglichst hohe Geschwindigkeit für die Bearbeitung der Karten 11 ermöglichen, wobei z.B. Geschwindigkeiten bis zu 50 000 Karten pro Stunde oder auch noch mehr angestrebt werden.

Die Einrichtung 10 weist eine allgemein mit 20 bezeichnete Bahn in Form einer Transportstrecke mit Mitnehmern 21 für den Transport der Karten 11 in Pfeilrichtung 22 auf. Diese Bahn 20 in Form einer Transportstrecke hat z.B. mindestens eine Kette, die die Mitnehmer 11 trägt und mittels der die Karten 11, die z.B. randseitig auf Schienen aufliegen, in Pfeilrichtung 22, mit einer hinteren Kante 14 an jeweils einem Mitnehmer 21 anstoßend, vorwärtstransportiert werden. Diese Transportstrecke kann auch mindestens ein Band aufweisen. Jeder Mitnehmer 21 besteht z.B. aus einem Nocken oder dergleichen. Die Bahn 20 verläuft beim gezeigten Ausführungsbeispiel z.B. horizontal.

Wie ersichtlich ist, weist die Einrichtung 10 mindestens eine im Bereich der Bahn 20 befindliche Station 30 auf. Es versteht sich gleichwohl, dass in Transportrichtung gemäß Pfeil 22 der Bahn auch mehrere, z.B. gleichgestaltete, Stationen 30 hintereinander angeordnet sein können, von denen z.B. eine oder mehrere Stationen 30 zum Lesen der Speicher der einzelnen Karten 11 dienen und weitere, in Transportrichtung gemäß Pfeil 22 in Abstand folgende Stationen analog der Station 30 zum Programmieren der einzelnen Karten 11 dienen. In diesem Fall kann eine Vervielfachung der Bearbeitungsgeschwindigkeit, bei zwei Stationen 30 z.B. eine Verdoppelung dieser, erreicht werden. Dabei könnte die Zwischenzeit, in der die Karten 11 von der ersten Station 30 zur nächstfolgenden Station gebracht werden, für etwaige weitere Bearbeitungsschritte genutzt werden, z.B. Überprüfen eines in der ersten Station aus dem jeweiligen Speicher der Karten 11 ausgelesenen Codeschlüssels durch Abgleich mit einem anderen Codeschlüssel, der z.B. in einem das Lesesystem steuernden Rechner integriert ist.

Auch wenn es nicht besonders dargestellt ist, ist statt dessen auch eine andere Gestaltung möglich, bei der quer zur Transportrichtung gemäß Pfeil 22 der Bahn 20 mehrere, vorzugsweise gleichgestaltete Stationen 30 nebeneinander angeordnet sind.

Die dargestellte Station 30 weist einen bewegten Träger 31 mit mehreren Haltevorrichtungen 32 auf, die zur kontaktierenden und/oder kontaktlosen Kommunikation mit den Karten 11 eingerichtet sind, was hier nicht weiter gezeigt ist. Der Träger 31 weist beim gezeigten Ausführungsbeispiel insgesamt einundzwanzig Haltevorrichtungen 32 gleicher Art auf. Jede Haltevorrichtung 32 dient zum Erfassen und Festhalten einer jeweils zugeordneten Karte 11 während der Bewegungsphase des Trägers 31 mit in dieser Zeit erfolgender Bearbeitung der Karten 11 und hiernach zum Abgeben der jeweiligen Karte 11 nach deren Bearbeitung. Die einzelnen Haltevorrichtungen 32 weisen jeweils eine nicht weiter gezeigte Druck- und/oder Saugeinrichtung auf, die mit dem Druck eines Mediums, insbesondere mit Gas, z.B. Luft, und dabei in der Ausbildung als Druckeinrichtung mit Überdruck und in der Ausbildung als Saugeinrichtung mit Unterdruck arbeitet, wobei mit Hilfe der genannten Druck- und/oder Saugeinrichtung die einzelnen Karten 11 mit Saugwirkung erfassbar und festhaltbar sind. Die erfassten und festgehaltenen Karten werden dabei in der jeweiligen Haltevorrichtung 32 zugleich in elektrisch leitenden Berührungskontakt mit dortigen Kontaktgebern für die kontaktierende Kommunikation gebracht und gehalten, so dass die Karten 11 in dieser Zeit bearbeitet werden können, z.B. gelesen, programmiert oder in sonstiger Weise behandelt werden können.

Bei einem nicht gezeigten Ausführungsbeispiel ist der Träger als langgestreckte Bahn ähnlich der Bahn 20 gestaltet, die zu letzterer etwa parallel verläuft. Beim gezeigten Ausführungsbeispiel hingegen ist der mindestens eine Träger 31 um eine Achse 37 in Pfeilrichtung 33 vorzugsweise mit gleichbleibender Geschwindigkeit kontinuierlich umlaufend drehbar. Die Achse 37 verläuft in Abstand oberhalb der Bahn 20, beispielsweise ebenfalls horizontal und dabei quer, insbesondere rechtwinklig, zur Bahn 20. Somit dreht sich der mindestens eine Träger 31 mit den einzelnen Haltevorrichtungen 32 oberhalb der Bahn 20 und dabei innerhalb einer solchen Ebene, die zumindest im wesentlichen in einer vertikalen Flucht mit der Bahn 20 liegt.

Der mindestens eine Träger 31 weist zumindest eine Scheibe 38, Trommel, ein Rad oder dergleichen auf, wobei die Scheibe 38 mittels einer nicht weiter gezeigten Antriebsvorrichtung um die Achse 37 umlaufend antreibbar ist, und hierbei vorzugsweise in der der Vorwärtstransportrichtung der Bahn 20 gemäß Pfeil 22 entgegengesetzten Drehrichtung gemäß Pfeil 33, z.B. im Gegenuhrzeigersinn. Die Anordnung kann so getroffen sein, dass die Bearbeitung einer von einer Haltevorrichtung 32 aufgenommenen Karte 11 nach einer Umlaufdrehung des Trägers 31, insbesondere der Scheibe 38, abgeschlossen ist. Der Durchmesser des mindestens einen Trägers 31, insbesondere der Scheibe 38, und/oder dessen Umlaufgeschwindigkeit und/oder die Anzahl der in etwa gleichen Umfangswinkelabständen angeordneten Haltevorrichtungen 32 können einer vorgegebenen Bearbeitungsleistung entsprechend gewählt und variiert werden.

Die einzelnen Haltevorrichtungen 32 der Scheibe 38 weisen ebene Aufnahmeflächen 34 mit zumindest einem Anschlag 49 auf, der entgegen der Umlaufrichtung der Scheibe gemäß Pfeil 33 wirksam ist. Die Aufnahmeflächen 34 und Anschläge 49 sind in etwa gleichen Umfangswinkelabständen voneinander am Außenumfang der Scheibe 38 angeordnet. Nicht dargestellt ist, dass in die Aufnahmeflächen 34 z.B. drei Öffnungen ausmünden, die über nicht gezeigte Kanäle mit einer Unterdruckquelle zur Erzeugung der Saugkraft und/oder einer Überdruckquelle zur Erzeugung eines Überdruckes in Verbindung stehen. Die Aufnahmeflächen 34 sind an mit dem Träger 31 fest verbundenen Bauteilen vorgesehen. Die jeweiligen Aufnahmeflächen 34 können zusätzlich bei Bedarf auch noch mit nicht gezeigten seitlichen Führungsanschlägen versehen sein, um die angesaugten und festgehaltenen Karten 11 im Bereich der Längskanten zusätzlich auszurichten und zu führen. Der in Umlaufrichtung des Trägers 31 vorn befindliche Anschlag 49 wirkt so, dass beim Aufnehmen einer Karte 11 diese mit ihrer vorderen Kante 13 am Anschlag 49 anschlägt und so ausgerichtet bleibt.

Die Einrichtung 10 weist mindestens eine erste Übergabevorrichtung 60 und/oder zweite Übergabevorrichtung 80 auf, die zwischen der Bahn 20 und dem Träger 31 platziert sind, wobei die Karten 11 mittels der ersten Übergabevorrichtung 60 von der Bahn 20 abnehmbar und an die Haltevorrichtungen 32 des Trägers 31 übergebbar sind und nach einem Umlauf des Trägers 31 von dessen Haltevorrichtungen 32 mittels der zweiten Übergabevorrichtung 80 abnehmbar und auf die Bahn 20 wieder übergebbar sind. Beim gezeigten Ausführungsbeispiel ist in vorteilhafter Weise die zweite Übergabevorrichtung 80 entsprechend der ersten Übergabevorrichtung 60 ausgebildet, was aber nicht zwingend ist. Jede Übergabevorrichtung 60, 80 weist jeweils ein in einer Drehrichtung gemäß Pfeil 61 bzw. 81 umlaufend angetriebenes Rad 62 bzw. 82 auf, das auf seinem Außenumfang einzelne in Umfangsrichtung beabstandete Halter 63 bzw. 83 zum Aufnehmen, Festhalten und Abgeben der Karten 11 aufweist. Beim gezeigten Ausführungsbeispiel sind je Rad 62 bzw. 82 insgesamt sechs Halter 63 bzw. 83 vorgesehen. Die einzelnen Halter 63 bzw. 83 des jeweiligen Rad 62 bzw. 82 weisen nachgiebige und sich durch vorzugsweise elastische Verformung anpassende Aufnehmer 64 bzw. 84 auf, die z.B. als Saugnäpfe ausgebildet sind.

Nicht weiter gezeigt ist, dass die Haltevorrichtungen 32 des Trägers 31 derart mit einer Unterdruck- und/oder Überdruckquelle in Verbindung stehen und gesteuert sind, dass diese Haltevorrichtungen 32 die Karten 11 durch Saugwirkung von einem jeweiligen Halter 63 des ersten Rades 62 übernehmen, während der Umlaufdrehung des Trägers 31 festhalten und hiernach zumindest unter Aufhebung der Saugwirkung auf das zweite Rad 82 abgeben. Nicht besonders dargestellt ist auch, dass die Halter 63 bzw. 83 des jeweiligen Rades 62 bzw. 82 mit einer Unterdruck- und/oder Überdruckquelle derart in Verbindung stehen und gesteuert sind, dass die Halter 63 des Rades 62 die Karten 11 durch Saugwirkung von der Bahn 20 abnehmen, während des Umlaufs des Rades 62 daran festhalten und zumindest unter Aufhebung der Saugwirkung danach an die Haltevorrichtungen 32 des Trägers 31 abgeben können. In gleicher Weise sind die Halter 83 des anderen Rades 82 derart gesteuert, dass dessen Halter 83 die Karten durch Saugwirkung von den Haltevorrichtungen 32 des Trägers 31 abnehmen, während des Umlaufs des zweiten Rades 82 daran festhalten und unter zumindest Aufhebung der Saugwirkung danach die Karten 11 an die Bahn 20 abgeben können.

Die Umfangswinkelabstände der einzelnen Haltevorrichtungen 32 voneinander weichen ab von den Abständen, den bei der Bahn 20 die einzelnen Mitnehmer 21 voneinander aufweisen. Beim gezeigten Ausführungsbeispiel ist der Umfangswinkelabstand der Haltevorrichtungen 32 kleiner als der Abstand der Mitnehmer 21 der Bahn 20 voneinander. In Anpassung daran ist jedes Rad 62, 82 so ausgebildet, dass der Umfangswinkelabstand der Halter 63 bzw. 83 des jeweiligen Rades 62 bzw. 82 im Bereich der Bahn 20 an den dortigen Abstand der Mitnehmer 21 für die Karten 11 voneinander und im Bereich des gegenüberliegenden Trägers 31 an den dortigen Abstand der Haltevorrichtungen 32 voneinander angepasst wird. Hierzu sind die Halter 63 bzw. 83 des jeweiligen Rades 62 bzw. 82 in Bezug auf die Achse 65 bzw. 85 dieses Rades radial bewegbar gehalten und gesteuert. Dabei sind die Halter 63 bzw. 83 relativ zum jeweiligen Rad 62 bzw. 82 in Radialrichtung derart gesteuert bewegbar, dass deren Umfangswinkelabstand voneinander bei der Raddrehung über einen Umfangswinkelbereich verkleinert wird und bei der Raddrehung über einen anderen Umfangswinkelbereich vergrößert wird. Das erste Rad 62 und/oder das zweite Rad 82 füllt den Bereich zwischen dem Träger 31, insbesondere der Scheibe 38, einerseits und der Bahn 20 andererseits mit seinem jeweiligen Wirkungsdurchmesser im wesentlichen aus. Das erste Rad 62 und/oder das zweite Rad 82 läuft gemäß Pfeil 61 bzw. 81 gegensinnig zur Scheibe 38 um, z.B. in einer der Vorwärtstransportrichtung der Bahn 20 gemäß Pfeil 22 entsprechenden Drehrichtung. z.B. im Uhrzeigersinn.

Beim gezeigten Ausführungsbeispiel sind die Halter 63 des ersten Rades 62 so gesteuert, dass diese bei der Raddrehung über einen Umfangswinkelbereich in Richtung zur Bahn 20 hin radial nach außen bewegt werden unter Herstellung eines größeren Umfangswinkelabstandes zwischen den Haltern 63 und bei der Raddrehung über einen anschließenden anderen Umfangswinkelbereich in Richtung zum Träger 31 hin radial einwärts bewegt werden unter Reduzierung des Umfangswinkelabstandes zwischen den einzelnen Haltern 63. In der Zeichnung ist nur schematisch angedeutet, dass die Halter 63 bzw. 83 relativ zum jeweiligen Rad 62 bzw. 82 radial beweglich geführte Führungskörper 66 bzw. 86, insbesondere Schlitten, aufweisen, die die Aufnehmer 64 bzw. 84, insbesondere Saugnäpfe, tragen. Die Halter 63 bzw. 83, insbesondere Führungskörper 66 bzw. 86 mit den Aufnehmern 64 bzw. 84, sind etwa sternförmig in Bezug auf die Achse 65 bzw. 85 des jeweiligen Rades 62 bzw. 82 angeordnet. Die Führungskörper 66 bzw. 86 sind je Rad 62 bzw. 82 längs radialen Führungsflächen, z.B. Führungsnuten, geführt, wobei zur Steuerung der Radialbewegung das jeweilige Rad 62 bzw. 82 eine zumindest zum Teil ausmittig umlaufende Nockenbahn 67 bzw. 87, insbesondere Nut, aufweist, mit der jeweilige Nocken 68 bzw. 88, z.B. Rollen, der einzelnen Führungskörper 66 bzw. 86 in Eingriff stehen. Die Nockenbahnen 67 bzw. 87 können räumlich feststehend angeordnet sein, so dass bei der Umlaufdrehung des jeweiligen Rades 62 bzw. 82 die Nocken 68 bzw. 88 in den Nockenbahnen 67 bzw. 87 umlaufen und dadurch die Radialbewegung der Führungskörper 66 bzw. 86 mit den Aufnehmern 64 bzw. 84 gesteuert wird.

Die Zeichnung zeigt, dass jedes Rad 62 bzw. 82 unterhalb des Trägers 31, insbesondere der Scheibe 38, angeordnet ist. Bei einem anderen, nicht gezeigten Ausführungsbeispiel können die Verhältnisse auch z.B. um 90° gedreht sein, wobei dann das jeweilige Rad 62 bzw. 82 seitlich neben dem Träger 31 angeordnet ist. Der mindestens eine bewegte Träger 31, insbesondere die Scheibe 38, ist um eine solche Achse 37 in Pfeilrichtung 33 umlaufend angetrieben, die quer zum Verlauf der Bahn 20 und oberhalb der Bahn 20 oder bei einem anderen, nicht gezeigten Ausführungsbeispiel seitlich neben der Bahn 20 verläuft. Die Umlaufrichtung des Trägers 31 gemäß Pfeil 33 ist der Vorwärtstransportrichtung gemäß Pfeil 22 der Bahn 20 entgegengerichtet. Das erste Rad 62 und/oder das zweite Rad 82 ist im wesentlichen innerhalb der gleichen Ebene wie der Träger 31, insbesondere die Scheibe 38, angeordnet. Diese befinden sich z.B. innerhalb einer mit der Zeichenebene übereinstimmenden Ebene. Das erste Rad 62 ist dabei, in Vorwärtsrichtung gemäß Pfeil 22 der Bahn 20 bertrachtet, dem Zentrum 37 der Scheibe 38 mit Abstand vorgelagert. Das zweite Rad 82 ist dem Zentrum der Scheibe 38 mit Abstand nachgeordnet. Die Achse 65 des vorgelagerten ersten Rades 62 weist den gleichen Abstand von der Achse 37 der Scheibe 38 auf wie die Achse 85 des anderen nachgeordneten Rades 82. Wie die Scheibe 38 so können auch das erste Rad 62 und/oder das zweite Rad 82 jeweils mit gleichbleibender Geschwindigkeit kontinuierlich umlaufen. Die Karten 11 sind mittels der Bahn 20 jeweils kontinuierlich zuführbar, mittels des ersten Rades 62 von der Bahn 20 durch Saugwirkung abnehmbar und durch Umlaufbewegung des ersten Rades 62 in Pfeilrichtung 61 zur Scheibe 38 hin transportierbar und während der Drehung der Scheibe 38 auf diese etwa im Bereich einer Tangentialebene übergebbar. Bei der Übergabe stoßen die Karten 11 mit der vorderen Kante 13 am Anschlag 49 an und werden dadurch in dieser Lage reproduzierbar ausgerichtet. Die Karten 11 können jeweils bei einem Umlauf der Scheibe 38 komplett bearbeitet, z.B. programmiert, werden, so dass dann, wenn eine Haltevorrichtung 32 nach dem Umlauf in Pfeilrichtung 33 in den Bereich des zweiten Rades 82 gelangt, jeweils eine Karte mittels dieses zweiten Rades 82 von einer Haltevorrichtung 32 der Scheibe 38 durch Saugwirkung abnehmbar ist. Auch hierzu bewegt sich das Rad 82 kontinuierlich, so dass dieser Vorgang ebenfalls kontinuierlich geschieht. Die jeweilige abgenommene Karte ist durch Saugwirkung dann am Rad 82, und zwar dem dortigen Halter 83, gehalten und wird durch Umlaufbewegung des zweiten Rades 82 in Pfeilrichtung 81 zur Bahn 20 hin transportiert und dort auf diese übergeben, z.B. durch Einlaufen in eine nicht weiter gezeigte Rampe, in der die Karte 11 im Bereich beider Längsränder übergriffen wird und dadurch bei der Drehung des Rades 82 vom jeweiligen Aufnehmer 84 abgelöst wird.

Die Anordnung ist so getroffen, dass das Rad 82 der zweiten Übergabevorrichtung 80 mit dessen Haltern 83, insbesondere Führungskörpern 86 mit Aufnehmern 84, den gleichen Raddurchmesser und/oder Wirkungsdurchmesser aufweist wie das Rad 62 der ersten Übergabevorrichtung 60 mit dessen Haltern 63, insbesondere Führungskörpern 66 mit Aufnehmern 64. Ersichtlich läuft das Rad 82 in der gleichen Drehrichtung gemäß Pfeil 81 wie das erste Rad 62 um. Die Räder 62 bzw. 82 sind, bezogen auf eine Diametrale des Trägers 31, insbesondere der Scheibe 38, welche zur Bahn 20 quer, insbesondere etwa rechtwinklig, gerichtet ist, symmetrisch angeordnet. Die Achsen 65 bzw. 85 beider Räder 62 bzw. 82 verlaufen in gleichen Abständen von der Bahn 20, insbesondere oberhalb dieser.

Aus Vorstehendem ist deutlich, dass mittels der Halter 63, insbesondere der Aufnehmer 64 an den Führungskörpern 66, des ersten Rades 62 beim Umlauf des ersten Rades 62 im Uhrzeigersinn gemäß Pfeil 61 nacheinander in kontinuierlicher Folge jeweils eine Karte 11 etwa parallel zum Verlauf der Bahn 20 von dieser abgehoben wird. Bei der Umlaufbewegung des Rades 62 gelangt ein Aufnehmer 64 in eine Ausrichtung etwa rechtwinklig zum Verlauf der Bahn 20, so dass der Aufnehmer 64 durch Saugwirkung dann eine Karte von der Bahn 20 abnehmen kann, die dann am Aufnehmer 64 des Rades 62 festgehalten ist. Bei der Weiterdrehung des Rades 62 wird diese Karte 11 etwa in tangentialer Ausrichtung in Bezug auf die Haltevorrichtungen 32 der Scheibe 38 an eine jeweilige freie Haltevorrichtung 32 herangeführt und auf diese übergeben. Die Übergabe erfolgt unter zumindest Aufhebung der Saugwirkung am Aufnehmer 64, gewünschtenfalls auch durch Druckumschaltung von Unterdruck auf Überdruck, so dass die Karte 11 zusätzlich vom Aufnehmer 64 durch Überdruck weggedrückt wird und in Richtung zur Aufnamefläche 34 der Haltevorrichtung 32 bewegt wird, wo die Karte 11 durch die Saugwirkung erfasst und festgehalten wird. Nach z.B. einer Umlaufbewegung der Scheibe 38 gelangt die Karte 11 in den Bereich des zweiten Rades 82 und wird mittels eines Halters 83, insbesondere eines Aufnehmers 84, des zweiten Rades 82 beim Umlauf dieses Rades in etwa tangentialer Ausrichtung in Bezug auf die Haltevorrichtung 32 der Scheibe 38 von dieser Haltevorrichtung 32 abgehoben. Dies geschieht durch Saugwirkung im Bereich des Aufnehmers 84 und kann zusätzlich unterstützt werden durch zumindest Aufhebung der Saugwirkung an der Haltevorrichtung 32 oder durch Umschaltung von Saugwirkung auf Überdruck, wodurch die Karte von der Haltevorrichtung 32 in Richtung zum Aufnehmer 84 des Rades 82 beaufschlagt wird. Die von einem Aufnehmer 84 übernommene Karte 11 wird bei der weiteren Umlaufbewegung des Rades 82 in Pfeilrichtung 81 ebenfalls in etwa tangentialer Ausrichtung zur Oberseite der Bahn 20 bewegt und dort auf die Bahn 20 abgegeben, und zwar in einem Bereich zwischen zwei Mitnehmern 21 und derart, dass sodann die auf der Bahn 20 aufliegende Karte durch Anstoßen des Mitnehmers 21 an deren hintere Kante 14 mitgenommen wird in entsprechender Ausrichtung wie bei der Zufuhr zum ersten Rad 62. Die Übernahme und jeweilige Übergabe der einzelnen Karten jeweils in etwa tangentialer Ausrichtung hat den Vorteil, dass die jeweilige Karte ihre Ausrichtung nicht oder nur geringfügig ändert, dass ferner keine größeren Relativbewegungen für das Erfassen und Abgeben der Karten zwischen den Komponenten der Station 30 notwendig sind und dass dadurch kontinuierliche und große Umlaufgeschwindigkeiten der umlaufenden Komponenten erreichbar sind. Die Einrichtung 10 gestattet es daher, in sehr kurzer Zeit und schnell eine sehr große Anzahl von Karten zu handhaben, vor allem zu bearbeiten, insbesondere zu lesen und/oder zu programmieren, wobei Geschwindigkeiten z.B. von 50 000 Karten pro Stunde oder auch mehr erreichbar sind. Die Gefahr etwaiger Funktionsstörungen ist ausgeschlossen. Bei allem ist die Einrichtung 10 einfach im Aufbau, kostengünstig und betriebssicher.

## Patentansprüche

1. Einrichtung zum. Bearbeiten kartenförmiger Informationsträger, wie Scheckkarten, Kreditkarten, Ausweiskarten od. dgl. Karten (11), mit mindestens einer Bahn (20) in Form einer Transportstrecke für den Transport der Karten (11), mit mindestens einer im Bereich der Bahn (20) befindlichen Bearbeitungsstation (30), die zumindest einen bewegten Träger (31) mit mehreren Haltevorrichtungen (32) aufweist, welche zum Erfassen und Festhalten einer jeweiligen Karte (11) während der Bewegungsphase des Trägers (31) mit in dieser Zeit erfolgender Bearbeitung und zum Abgeben einer jeweiligen Karte (11) nach der Bearbeitung dienen, und mit mindestens einer ersten Übergabevorrichtung (60) und/oder zweiten Übergabevorrichtung (80) zwischen der Bahn (20) und dem bewegten Träger (31), wobei die Karten (11) mittels der ersten Übergabevorrichtung (60) von der Bahn (20) abnehmbar und an die Haltevorrichtungen (32) des Trägers (31) übergebbar sind und mittels der zweiten Übergabevorrichtung (80) von den Haltevorrichtungen (32) des Trägers (31) abnehmbar und auf die Bahn (20) übergebbar sind,
**dadurch gekennzeichnet,**
**dass** die jeweilige Übergabevorrichtung (60,80) jeweils ein in einer Drehrichtung umlaufend angetriebenes Rad (62,82) aufweist, das auf seinem Außenumfang einzelne in Umfangsrichtung beabstandete Halter (63,83) zum Aufnehmen, Festhalten und Abgeben der Karten (11) aufweist.

2. Einrichtung nach Anspruch 1,
**dadurch gekennzeichnet,**
**dass** die einzelnen Halter (63,83) des jeweiligen Rades (62,82) nachgiebige und sich durch vorzugsweise elastische Verformung anpassende Aufnehmer (64,84) aufweisen.

3. Einrichtung nach Anspruch 1 oder 2,
**dadurch gekennzeichnet,**
**dass** die Halter (63,83) des jeweiligen Rades (62,82) mit einer Unterdruck- und/oder Überdruckquelle derart in Verbindung stehen und gesteuert sind, dass die Halter (63,83) die Karten (11) durch Saugwirkung von der Bahn (20) bzw. von den Haltevorrichtungen (32) des Trägers (31) abnehmen, während des Umlaufs des jeweiligen Rades (62,82) daran festhalten und unter zumindest Aufhebung der Saugwirkung danach an die Haltevorrichtungen (32) des Trägers (31) bzw. an die Bahn (20) abgeben können.

4. Einrichtung nach einem der Ansprüche 1 bis 3,
**dadurch gekennzeichnet,**
**dass** die Halter (63,83) des jeweiligen Rades (62,82) als Aufnehmer (64,84) Saugnäpfe aufweisen.

5. Einrichtung nach einem der Ansprüche 1 bis 4,
**dadurch gekennzeichnet,**
**dass** die Halter (63,83) des jeweiligen Rades (62,82) in Bezug auf die Achse (65,85) des Rades (62,82) radial bewegbar gehalten sind.

6. Einrichtung nach Anspruch 5,
**dadurch gekennzeichnet,**
**dass** die Halter (63,83) relativ zum jeweiligen Rad (62,82) in Radialrichtung derart gesteuert bewegbar sind, dass deren Umfangswinkelabstand voneinander bei der Raddrehung über einen Umfangswinkelbereich verkleinert und bei der Raddrehung über einen anderen Umfangswinkelbereich vergrößert wird.

7. Einrichtung nach einem der Ansprüche 1 bis 6,
**dadurch gekennzeichnet,**
**dass** der Umfangswinkelabstand der Halter (63,83) des jeweiligen Rades (62,82) im Bereich der Bahn (20) an den dortigen Abstand von Bahnmitnehmem (21) für die Karten (11) voneinander und im Bereich des Trägers (31) an den dortigen Abstand der Haltevorrichtungen (32) voneinander angepasst wird.

8. Einrichtung nach einem der Ansprüche 1 bis 7,
**dadurch gekennzeichnet,**
**dass** die Halter (63,83) relativ zum jeweiligen Rad (62,82) radial beweglich geführte Führungskörper (66,86), insbesondere Schlitten, aufweisen, die die Aufnehmer (64,84), insbesondere Saugnäpfe, tragen.

9. Einrichtung nach Anspruch 8,
**dadurch gekennzeichnet,**
**dass** beim jeweiligen Rad (62,82) die Halter (63,83), insbesondere die Führungskörper (66,86) mit den Aufnehmern (64,84), etwa sternförmig in Bezug auf die Achse (65,85) des jeweiligen Rades (62,82) angeordnet sind.

10. Einrichtung nach einem der Ansprüche 6 bis 9,
**dadurch gekennzeichnet,**
**dass** die Halter (63,83), insbesondere die Führungskörper (66,86) mit den Aufnehmern (64,84), mittels Nockenbahnen (67,87) des jeweiligen Rades (62,82) und damit in Eingriff stehenden Nocken (68,88) radial bewegbar gesteuert sind.

11. Einrichtung nach Anspruch 10,
**dadurch gekennzeichnet,**
**dass** das jeweilige Rad (62,82) eine zumindest zum Teil ausmittig umlaufende Nockenbahn (67,87) insbesondere Nut, aufweist, mit der jeweilige Nocken (68,88), z. B. Rollen, der einzelnen Führungskörper (66,86) in Eingriff stehen.

12. Einrichtung nach einem der Ansprüche 1 bis 11,
**dadurch gekennzeichnet,**
**dass** das jeweilige Rad (62,82) unterhalb oder seitlich neben dem Träger (31) angeordnet ist.

13. Einrichtung nach einem der Ansprüche 1 bis 12,
**dadurch gekennzeichnet,**
**dass** der mindestens eine bewegte Träger (31) mindestens eine Scheibe (38), Trommel od. dgl. aufweist, die um eine quer zum Verlauf der Bahn (20) und oberhalb der Bahn (20) oder seitlich neben der Bahn (20) verlaufende Achse (37) in einer Drehrichtung umlaufend angetrieben ist, vorzugsweise in einer der Vorwärtstransportrichtung der Bahn (20) entgegengesetzten Drehrichtung, z. B. im Gegenuhrzeigersinn.

14. Einrichtung nach Anspruch 13,
**dadurch gekennzeichnet,**
**dass** die Haltevorrichtungen (32)der Scheibe (38) Aufnahmeflächen (34) mit zumindest einem entgegen der Umlaufrichtung der Scheibe (38) wirksamen Anschlag (49) aufweisen, die in etwa gleichen Umfangswinkelabständen voneinander am Außenumfang der Scheibe (38) angeordnet sind.

15. Einrichtung nach einem der Ansprüche 1 bis 14,
**dadurch gekennzeichnet,**
**dass** die Haltevorrichtungen (32) des Trägers (31), insbesondere der Scheibe (38), mit einer Unterdruck- und/oder Überdruckquelle derart in Verbindung stehen und gesteuert sind, dass diese die Karten (11) durch Saugwirkung von einem jeweiligen Halter (63) des ersten Rades (62) übernehmen, während der Umlaufdrehung der Scheibe (38) festhalten und hiernach zumindest unter Aufhebung der Saugwirkung abgeben, insbesondere auf das zweite Rad (82) abgeben.

16. Einrichtung nach einem der Ansprüche 1 bis 15,
**dadurch gekennzeichnet,**
**dass** das erste Rad (62) und/oder das zweite Rad (82) den Bereich zwischen der Scheibe (38) und der Bahn (20) mit seinem jeweiligen Wirkungsdurchmesser im wesentlichen ausfüllt.

17. Einrichtung nach einem der Ansprüche 1 bis 16,
**dadurch gekennzeichnet,**
**dass** das erste Rad (62) und/oder das zweite Rad (82) gegensinnig zur Scheibe (38) umläuft.

18. Einrichtung nach einem der Ansprüche 1 bis 17,
**dadurch gekennzeichnet,**
**dass** das erste Rad (62) und/oder das zweite Rad (82) in einer der Vorwärtstransportrichtung der Bahn (20) entsprechenden Drehrichtung, z. B. im Uhrzeigersinn, umläuft.

19. Einrichtung nach einem der Ansprüche 1 bis 18,
**dadurch gekennzeichnet,**
**das** das erste Rad (62) und/oder das zweite Rad (82) im wesentlichen in der gleichen Ebene wie die Scheibe (38) angeordnet ist.

20. Einrichtung nach einem der Ansprüche 1 bis 19,
**dadurch gekennzeichnet,**
**dass** das erste Rad (62),in Vorwärtstransportrichtung der Bahn (20) betrachtet, dem Zentrum (37) der Scheibe (38) mit Abstand vorgelagert und das zweite Rad (82) dem Zentrum (37) der Scheibe (38) mit Abstand nachgeordnet ist.

21. Einrichtung nach einem der Ansprüche 1 bis 20,
**dadurch gekennzeichnet,**
**dass** die Achse (65) des vorgelagerten ersten Rades (62), in Vorwärtstransportrichtung der Bahn (20) betrachtet, den gleichen Abstand von der Achse (37) der Scheibe (38) aufweist wie die Achse (85) des nachgeordneten zweiten Rades (82).

22. Einrichtung nach einem der Ansprüche 1 bis 21,
**dadurch gekennzeichnet,**
**dass** der Träger (31), insbesondere die Scheibe (38), und/oder das erste Rad (62) und/oder das zweite Rad (82) jeweils mit gleichbleibender Geschwindigkeit kontinuierlich umlaufen.

23. Einrichtung nach einem der Ansprüche 1 bis 22,
**dadurch gekennzeichnet,**
**dass** die Karten (11) jeweils kontinuierlich mittels der Bahn (20) zuführbar, mittels des ersten Rades (62) von der Bahn (20) abnehmbar und durch Umlaufbewegung des ersten Rades (20) zur Scheibe (38) hin transportierbar und während der Drehung der Scheibe (38) auf diese übergebbar sind.

24. Einrichtung nach einem der Ansprüche 1 bis 23,
**dadurch gekennzeichnet,**
**dass** die Karten (11) jeweils kontinuierlich mittels des zweiten Rades (82) von der Scheibe (38) abnehmbar und durch Umlaufbewegung des zweiten Rades (82) zur Bahn (20) hin transportierbar und auf diese übergebbar sind.

25. Einrichtung nach einem der Ansprüche 1 bis 24,
**dadurch gekennzeichnet,**
**dass** die zweite Übergabevorrichtung (80) der ersten Übergabevorrichtung (60) entsprechend ausgebildet ist.

26. Einrichtung nach einem der Ansprüche 1 bis 25,
**dadurch gekennzeichnet,**
**dass** das Rad (82) der zweiten Übergabevorrichtung (80) mit dessen Haltern (83), insbesondere Führungskörpern (86) mit Aufnehmern (84), den gleichen Raddurchmesser und/oder Wirkungsdurchmesser aufweist, wie das Rad (62) der ersten Übergabevorrichtung (60) mit dessen Haltern (63), insbesondere Führungskörpern (66) mit Aufnehmern (64).

27. Einrichtung nach einem der Ansprüche 1 bis 26,
**dadurch gekennzeichnet,**
**dass** das Rad (82) der zweiten Übergabevorrichtung (80)in der gleichen Drehrichtung umläuft wie das Rad (62) der ersten Übergabevorrichtung (60).

28. Einrichtung nach einem der Ansprüche 1 bis 27,
**dadurch gekennzeichnet,**
**dass** die Räder (62,82) beider Übergabevorrichtungen (60,80) mit ihren Achsen (65,85), bezogen auf eine Diametrale des Trägers (31), insbesondere der Scheibe (38), die zur Bahn (20) quer, insbesondere etwa rechtwinklig, gerichtet ist, symmetrisch angeordnet sind.

29. Einrichtung nach einem der Ansprüche 1 bis 28,
**dadurch gekennzeichnet,**
**dass** die Achsen (65,85) der Räder (62,82) beider Übergabevorrichtungen (60,80) in gleichen Abständen von der Bahn (20), insbesondere oberhalb dieser, verlaufen.

30. Einrichtung nach einem der Ansprüche 1 bis 29,
**dadurch gekennzeichnet,**
**dass** mittels der Halter (63), insbesondere der Aufnehmer (64) an den Führungskörpern (66), des ersten Rades (62) beim Umlauf des Rades (62) nacheinander jeweils eine Karte (11) etwa parallel zum Bahnverlauf von der Bahn (20) abhebbar , festhaltbar und durch Drehung des Rades (62) etwa in tangentialer Ausrichtung in Bezug auf die Haltevorrichtungen (32) des Trägers (31), insbesondere der Scheibe (38), an diese Haltevorrichtungen (32) heranführbar und übergebbar ist.

31. Einrichtung nach einem der Ansprüche 1 bis 30,
**dadurch gekennzeichnet,**
**dass** mittels der Halter (83), insbesondere der Aufnehmer (84) an den Führungskörpern (86), des zweiten Rades (82) beim Umlauf des Rades (82) nacheinander jeweils eine Karte (11) etwa in tangentialer Ausrichtung in Bezug auf die Haltevorrichtungen (32) des Trägers (31), insbesondere der Scheibe (38), von jeweils einer Haltevorrichtung (32) abhebbar, festhaltbar und durch Drehung des Rades (82) an die Bahn (20) heranführbar und etwa parallel zum Bahnverlauf auf die Bahn (20) übergebbar ist.

32. Einrichtung nach einem der Ansprüche 1 bis 31,
**dadurch gekennzeichnet,**
**dass** der Träger (31), insbesondere die Scheibe (38), einundzwanzig Haltevorrichtungen (32) aufweist.

33. Einrichtung nach einem der Ansprüche 1 bis 32,
**dadurch gekennzeichnet,**
**dass** das Rad (62) der ersten Übergabevorrichtung (60) und/oder das Rad (82) der zweiten Übergabevorrichtung (80) sechs Halter (63 bzw. 83) aufweist.

## Claims

1. Device for processing card-like information carriers, such as cheque cards, credit cards, identity cards or similar cards (11), having at least one path (20) in the form of a transportation section for transporting the cards (11), having at least one processing station (30) which is located in the region of the path (20) and has at least one moving carrier (31) with a plurality of holding apparatuses (32) which are used to grasp and firmly hold a respective card (11) during the movement phase of the carrier (31), with processing being performed during this time, and to discharge a respective card (11) following processing, and having at least one first transfer apparatus (60) and/or second transfer apparatus (80) between the path (20) and the moving carrier (31), it being possible to remove the cards (11) from the path (20) and transfer them to the holding apparatuses (32) of the carrier (31) by means of the first transfer apparatus (60), and to remove the said cards from the holding apparatuses (32) of the carrier (31) and transfer them to the path (20) by means of the second transfer apparatus (80),
**characterized**
**in that** the respective transfer apparatus (60, 80) in each case has a wheel (62, 82) which is driven so as to revolve in one direction of rotation and whose outer circumference has individual holders (63, 83) for picking up, firmly holding and discharging the cards (11), these holders being spaced apart in the circumferential direction.

2. Device according to Claim 1,
**characterized**
**in that** the individual holders (63, 83) of the respective wheel (62, 82) have flexible pick-up means (64, 84) which are adapted by preferably elastic deformation.

3. Device according to Claim 1 or 2,
**characterized**
**in that** the holders (63, 83) of the respective wheel (62, 82) are connected to a subatmospheric and/or superatmospheric pressure source and controlled in such a way that the holders (63, 83) can remove the cards (11) from the path (20) or from the holding apparatuses (32) of the carrier (31) by suction, firmly hold them during revolution of the respective wheel (62, 82), and then discharge them to the holding apparatuses (32) of the carrier (31) or to the path (20) by at least cancelling the suction.

4. Device according to one of Claims 1 to 3,
**characterized**
**in that** the holders (63, 83) of the respective wheel (62, 82) have pick-up means (64, 84) in the form of suction cups.

5. Device according to one of Claims 1 to 4,
**characterized**
**in that** the holders (63, 83) of the respective wheel (62, 82) are held such that they can be moved radially in relation to the axis (65, 85) of the wheel (62, 82).

6. Device according to Claim 5,
**characterized**
**in that** the holders (63, 83) can be moved in a controlled manner in relation to the respective wheel (62, 82) in the radial direction in such a way that their circumferential angular distance from one another is reduced when the wheel is rotated over one circumferential angular range and is increased when the wheel is rotated over another circumferential angular range.

7. Device according to one of Claims 1 to 6,
**characterized**
**in that** the circumferential angular distance between the holders (63, 83) of the respective wheel (62, 82) is matched to the distance of path drivers (21) for the cards (11) from one another in the region of the path (20), and is matched to the distance of the holding apparatuses (32) from one another in the region of the carrier (31).

8. Device according to one of Claims 1 to 7,
**characterized**
**in that** the holders (63, 83) have guide bodies (66, 86), in particular slides, which are guided such that they can move radially in relation to the respective wheel (62, 82), and which carry the pick-up means (64, 84), in particular suction cups.

9. Device according to Claim 8,
**characterized**
**in that**, in the case of the respective wheel (62, 82), the holders (63, 83), in particular the guide bodies (66, 86) with the pick-up means (64, 84), are arranged in an approximate star shape in relation to the axis (65, 85) of the respective wheel (62, 82).

10. Device according to one of Claims 6 to 9,
**characterized**
**in that** the holders (63, 83), in particular the guide bodies (66, 86) with the pick-up means (64, 84), are controlled such that they can be moved radially by means of cam paths (67, 87) of the respective wheel (62, 82) and cams (68, 88) which engage with the said cam paths.

11. Device according to Claim 10,
**characterized**
**in that** the respective wheel (62, 82) has an at least partly eccentrically revolving cam path (67, 87), in particular groove, with which respective cams (68, 88), for example rollers, of the individual guide bodies (66, 86) engage.

12. Device according to one of Claims 1 to 11,
**characterized**
**in that** the respective wheel (62, 82) is arranged below or to the side of the carrier (31).

13. Device according to one of Claims 1 to 12,
**characterized**
**in that** the at least one moving carrier (31) has at least one disc (38), drum or the like, which is driven so as to revolve in one direction of rotation about an axis (37) which runs transverse to the course of the path (20) and above the path (20) or to the side of the path (20), preferably in a direction of rotation opposite to the forward transportation direction of the path (20), for example in the anticlockwise direction.

14. Device according to Claim 13,
**characterized**
**in that** the holding apparatuses (32) of the disc (38) have receiving surfaces (34) with at least one stop (49) which acts counter to the direction of revolution of the disc (38), which receiving surfaces are arranged on the outer circumference of the disc (38) at approximately equal circumferential angular distances from one another.

15. Device according to one of Claims 1 to 14,
**characterized**
**in that** the holding apparatuses (32) of the carrier (31), in particular the disc (38), are connected to a subatmospheric and/or superatmospheric pressure source and controlled in such a way that they can take the cards (11) from a respective holder (63) of the first wheel (62) by suction, firmly hold them during rotation of the disc (38), and then discharge them, in particular onto the second wheel (82), at least by cancelling the suction.

16. Device according to one of Claims 1 to 15,
**characterized**
**in that** the respective effective diameters of the first wheel (62) and/or the second wheel (82) substantially fill up the region between the disc (38) and the path (20).

17. Device according to one of Claims 1 to 16,
**characterized**
**in that** the first wheel (62) and/or the second wheel (82) revolve or revolves in the opposite direction to the disc (38).

18. Device according to one of Claims 1 to 17,
**characterized**
**in that** the first wheel (62) and/or the second wheel (82) revolve or revolves in a direction of rotation which corresponds to the forward transportation direction of the path (20), for example clockwise.

19. Device according to one of Claims 1 to 18,
**characterized**
**in that** the first wheel (62) and/or the second wheel (82) are/is arranged substantially in the same plane as the disc (38).

20. Device according to one of Claims 1 to 19,
**characterized**
**in that** the first wheel (62), as viewed in the forward transportation direction of the path (20), is mounted at a distance in front of the centre (37) of the disc (38), and the second wheel (82) is mounted at a distance behind the centre (37) of the disc (38).

21. Device according to one of Claims 1 to 20,
**characterized**
**in that** the axis (65) of the first wheel (62) which is mounted in front, as viewed in the forward transportation direction of the path (20), is at the same distance from the axis (37) of the disc (38) as the axis (85) of the second wheel (82) which is mounted behind.

22. Device according to one of Claims 1 to 21,
**characterized**
**in that** the carrier (31), in particular the disc (38), and/or the first wheel (62) and/or the second wheel (82) each continuously revolve or revolves at a constant speed.

23. Device according to one of Claims 1 to 22,
**characterized**
**in that** the cards (11) can each be continuously supplied by means of the path (20), removed from the path (20) by means of the first wheel (62) and transported towards the disc (38) by the revolving movement of the first wheel (20), and transferred to the disc (38) during rotation of the latter.

24. Device according to one of Claims 1 to 23,
**characterized**
**in that** the cards (11) can each be continuously removed from the disc (38) by means of the second wheel (82) and transported towards the path (20) by the revolving movement of the second wheel (82), and transferred to the said path.

25. Device according to one of Claims 1 to 24,
**characterized**
**in that** the second transfer apparatus (80) is formed in a manner which corresponds to the first transfer apparatus (60).

26. Device according to one of Claims 1 to 25,
**characterized**
**in that** the wheel (82) of the second transfer apparatus (80) with its holders (83), in particular guide bodies (86) with pick-up means (84), has the same wheel diameter and/or effective diameter as the wheel (62) of the first transfer apparatus (60) with its holders (63), in particular guide bodies (66) with pick-up means (64).

27. Device according to one of Claims 1 to 26,
**characterized**
**in that** the wheel (82) of the second transfer apparatus (80) revolves in the same direction of rotation as the wheel (62) of the first transfer apparatus (60).

28. Device according to one of Claims 1 to 27,
**characterized**
**in that** the axes (65, 85) of the wheels (62, 82) of the two transfer apparatuses (60, 80) are arranged symmetrically in relation to a diameter of the carrier (31), in particular of the disc (38), which is directed transverse, in particular approximately perpendicular, to the path (20).

29. Device according to one of Claims 1 to 28,
**characterized**
**in that** the axes (65, 85) of the wheels (62, 82) of the two transfer apparatuses (60, 80) run at the same distances from the path (20), in particular above the latter.

30. Device according to one of Claims 1 to 29,
**characterized**
**in that**, in succession, in each case one card (11) can be lifted off from the path (20) approximately parallel to the course of the path, firmly held and led and transferred to the holding apparatuses (32) of the carrier (31), in particular the disc (38), by rotating the wheel (62) approximately with a tangential orientation in relation to these holding apparatuses (32) by means of the holders (63), in particular the pick-up means (64) on the guide bodies (66), of the first wheel (62) when the wheel (62) revolves.

31. Device according to one of Claims 1 to 30,
**characterized**
**in that**, in succession, in each case one card (11) can be lifted off from in each case one holding apparatus (32), firmly held and led to the path (20) by rotating the wheel (82) approximately with a tangential orientation in relation to the holding apparatuses (32) of the carrier (31), in particular the disc (38), and transferred to the path (20) approximately parallel to the course of the path (20) by means of the holders (83), in particular the pick-up means (84) on the guide bodies (86), of the second wheel (82) when the wheel (82) revolves.

32. Device according to one of Claims 1 to 31,
**characterized**
**in that** the carrier (31), in particular the disc (38), has 21 holding apparatuses (32).

33. Device according to one of Claims 1 to 32,
**characterized**
**in that** the wheel (62) of the first transfer apparatus (60) and/or the wheel (82) of the second transfer apparatus (80) have/has six holders (63 and/or 83 respectively).

## Revendications

1. Dispositif de traitement de supports d'informations sous forme de cartes, telles que des cartes bancaires, des cartes de crédit, des cartes d'identité ou des cartes analogues (11), avec au moins une bande (20) sous la forme d'une section de transport pour le transport des cartes (11), avec au moins une station de traitement (30) se trouvant dans la région de la bande (20), qui comprend au moins un support mobile (31) avec plusieurs dispositifs de maintien (32) qui servent pour saisir et maintenir une carte respective (11) pendant la phase de mouvement du support (31) avec le traitement exécuté pendant ce temps et pour libérer une carte respective (11) après le traitement, et avec au moins un premier dispositif de transfert (60) et/ou un deuxième dispositif de transfert (80) entre la bande (20) et le support mobile (31), dans lequel les cartes (11) peuvent être reprises de la bande (20) et transférées aux dispositifs de maintien (32) du support (31) au moyen du premier dispositif de transfert (60) et peuvent être reprises des dispositifs de maintien (32) du support (31) et transférées sur la bande (20) au moyen du deuxième dispositif de transfert (80), **caractérisé en ce que** le dispositif de transfert respectif (60, 80) comprend chaque fois une roue (62, 82) entraînée en rotation dans un sens de rotation, qui présente sur sa périphérie extérieure des supports individuels (63, 83) espacés en direction périphérique, pour reprendre, maintenir et transférer les cartes (11).

2. Dispositif selon la revendication 1, **caractérisé en ce que** les supports individuels (63, 83) de chaque roue (62, 82) comportent des récepteurs déformables (64, 84) qui s'adaptent par une déformation de préférence élastique.

3. Dispositif selon la revendication 1 ou 2, **caractérisé en ce que** les supports (63, 83) de chaque roue (62, 82) sont en communication avec une source de dépression et/ou de surpression et sont commandés de telle manière que les supports (63, 83) puissent reprendre les cartes (11) de la bande (20) respectivement des dispositifs de maintien (32) du support (31) par aspiration, les maintenir par aspiration sur les roues respectives (62, 82) pendant la rotation de celles-ci et ensuite, par suppression au moins de l'effet d'aspiration, les transférer aux dispositifs de maintien (32) du support (31) respectivement à la bande (20).

4. Dispositif selon l'une quelconque des revendications 1 à 3, **caractérisé en ce que** les supports (63, 83) de chaque roue (62, 82) présentent comme récepteurs (64, 84) des ventouses aspirantes.

5. Dispositif selon l'une quelconque des revendications 1 à 4, **caractérisé en ce que** les supports (63, 83) de chaque roue (62, 82) sont maintenus de façon mobile radialement par rapport à l'axe (65, 85) de la roue (62, 82).

6. Dispositif selon la revendication 5, **caractérisé en ce que** les supports (63, 83) sont mobiles par commande en direction radiale par rapport à la roue respective (62, 82) de telle manière que leur distance angulaire périphérique l'un par rapport à l'autre diminue lors de la rotation des roues sur une plage angulaire périphérique et augmente lors de la rotation des roues sur une autre plage angulaire périphérique.

7. Dispositif selon l'une quelconque des revendications 1 à 6, **caractérisé en ce que** la distance angulaire périphérique des supports (63, 83) de chaque roue (62, 82) est adaptée dans la région de la bande (20) à la distance locale d'entraîneurs de bande (21) pour les cartes (11) l'un par rapport à l'autre et dans la région du support (31) à la distance locale des dispositifs de maintien (32) l'un par rapport à l'autre.

8. Dispositif selon l'une quelconque des revendications 1 à 7, **caractérisé en ce que** les supports (63, 83) comprennent des corps de guidage (66, 86) guidés de façon mobile radialement par rapport à chaque roue (62, 82), en particulier des coulisseaux, qui portent les récepteurs (64, 84), en particulier des ventouses aspirantes.

9. Dispositif selon la revendication 8, **caractérisé en ce que** dans chaque roue (62, 82), les supports (63, 83), en particulier les corps de guidage (66, 86) avec les récepteurs (64, 84), sont disposés sensiblement en étoile par rapport à l'axe (65, 85) de la roue respective (62, 82).

10. Dispositif selon l'une quelconque des revendications 6 à 9, **caractérisé en ce que** les supports (63, 83), en particulier les corps de guidage (66, 86) avec les récepteurs (64, 84), sont commandés de façon mobile radialement au moyen de voies de came (67, 87) de la roue respective (62, 82) et de cames (68, 88) en prise avec celles-ci.

11. Dispositif selon la revendication 10, **caractérisé en ce que** chaque roue (62, 82) comporte une voie de came (67, 87), en particulier une rainure, périphérique au moins partiellement excentrée, avec laquelle des cames respectives (68, 88), par exemple des galets, des corps de guidage individuels (66, 86) sont en prise.

12. Dispositif selon l'une quelconque des revendications 1 à 11, **caractérisé en ce que** chaque roue (62, 82) est disposée en dessous ou latéralement à côté du support (31).

13. Dispositif selon l'une quelconque des revendications 1 à 12, **caractérisé en ce que** ledit au moins un support mobile (31) comporte au moins un disque (38), un tambour ou analogue, qui est entraîné en rotation autour d'un axe (37) orienté transversalement au défilement de la bande (20) situé au-dessus de la bande (20) ou latéralement à côté de la bande (20) dans un sens de rotation, de préférence dans un sens de rotation opposé au sens de transport de la bande (20), par exemple dans le sens antihoraire.

14. Dispositif selon la revendication 13, **caractérisé en ce que** les dispositifs de maintien (32) du disque (38) présentent des faces de réception (34) avec au moins une butée (49) active à l'opposé du sens de rotation du disque (38), qui sont disposées à des distances angulaires périphériques l'une par rapport à l'autre sensiblement égales sur la périphérie extérieure du disque (38).

15. Dispositif selon l'une quelconque des revendications 1 à 14, **caractérisé en ce que** les dispositifs de maintien (32) du support (31), en particulier du disque (38) sont en communication avec une source de dépression et/ou de surpression et sont commandés de telle manière que ceux-ci reprennent les cartes (11) d'un support respectif (63) de la première roue (62) par aspiration, les maintiennent par aspiration pendant la rotation du disque (38) et ensuite, par suppression au moins de l'effet d'aspiration, les transfèrent en particulier à la deuxième roue (82).

16. Dispositif selon l'une quelconque des revendications 1 à 15, **caractérisé en ce que** la première roue (62) et/ou la deuxième roue (82) remplit sensiblement, avec son diamètre utile respectif, la région comprise entre le disque (38) et la bande (20).

17. Dispositif selon l'une quelconque des revendications 1 à 16, **caractérisé en ce que** la première roue (62) et/ou la deuxième roue (82) tourne en sens contraire du disque (38).

18. Dispositif selon l'une quelconque des revendications 1 à 17, **caractérisé en ce que** la première roue (62) et/ou la deuxième roue (82) tourne dans un sens de rotation correspondant au sens de transport de la bande (20), par exemple dans le sens horaire.

19. Dispositif selon l'une quelconque des revendications 1 à 18, **caractérisé en ce que** la première roue (62) et/ou la deuxième roue (82) est disposée sensiblement dans le même plan que le disque (38).

20. Dispositif selon l'une quelconque des revendications 1 à 19, **caractérisé en ce que** la première roue (62), considérée dans le sens de transport de la bande (20), est placée à une certaine distance en avant du centre (37) du disque (38) et la deuxième roue (82) est placée à une certaine distance en arrière du centre (37) du disque (38).

21. Dispositif selon l'une quelconque des revendications 1 à 20, **caractérisé en ce que** l'axe (65) de la première roue avancée (62), considérée dans le sens de transport de la bande (20), présente la même distance par rapport à l'axe (37) du disque (38) que l'axe (85) de la deuxième roue reculée (82).

22. Dispositif selon l'une quelconque des revendications 1 à 21, **caractérisé en ce que** le support (31), en particulier le disque (38), et/ou la première roue (62) et/ou la deuxième roue (82) tournent en continu avec une vitesse constante.

23. Dispositif selon l'une quelconque des revendications 1 à 22, **caractérisé en ce que** les cartes (11) peuvent, chaque fois en continu, être introduites au moyen de la bande (20), être reprises de la bande (20) au moyen de la première roue (62), être transportées vers le disque (38) par le mouvement de rotation de la première roue (62) et être transférées au disque (38) pendant la rotation de celui-ci.

24. Dispositif selon l'une quelconque des revendications 1 à 23, **caractérisé en ce que** les cartes (11) peuvent, chaque fois en continu, être reprises du disque (38) au moyen de la deuxième roue (82), transportées vers la bande (20) et transférées à cette dernière par le mouvement de rotation de la deuxième roue (82).

25. Dispositif selon l'une quelconque des revendications 1 à 24, **caractérisé en ce que** le deuxième dispositif de transfert (80) est configuré de façon correspondante au premier dispositif de transfert (60).

26. Dispositif selon l'une quelconque des revendications 1 à 25, **caractérisé en ce que** la roue (82) du deuxième dispositif de transfert (80) avec ses supports (83), en particulier ses corps de guidage (86) avec des récepteurs (84), présente le même diamètre de roue et/ou le même diamètre utile que la roue (62) du premier dispositif de transfert (60) avec ses supports (63), en particulier ses corps de guidage (66) avec des récepteurs (64).

27. Dispositif selon l'une quelconque des revendications 1 à 26, **caractérisé en ce que** la roue (82) du deuxième dispositif de transfert (80) tourne dans le même sens de rotation que la roue (62) du premier dispositif de transfert (60).

28. Dispositif selon l'une quelconque des revendications 1 à 27, **caractérisé en ce que** les roues (62, 82) des deux dispositifs de transfert (60, 80) sont disposées avec leurs axes (65, 85) de façon symétrique par rapport à un plan diamétral du support (31), en particulier du disque (38), qui est orienté transversalement, en particulier de façon sensiblement perpendiculaire, par rapport à la bande (20).

29. Dispositif selon l'une quelconque des revendications 1 à 28, **caractérisé en ce que** les axes (65, 85) des roues (62, 82) des deux dispositifs de transfert (60, 80) sont situés à égale distance de la bande (20), en particulier au-dessus de celle-ci.

30. Dispositif selon l'une quelconque des revendications 1 à 29, **caractérisé en ce que**, au moyen des supports (63), en particulier des récepteurs (64) sur les corps de guidage (66), de la première roue (62) lors de la rotation de la roue (62), chaque fois une carte (11) peut successivement être reprise de la bande (20) sensiblement parallèlement à la trajectoire de la bande, être maintenue et, par la rotation de la roue (62), être approchée sensiblement en direction tangentielle par rapport aux dispositifs de maintien (32) du support (31), en particulier du disque (38), et être transférée à ces dispositifs de maintien (32).

31. Dispositif selon l'une quelconque des revendications 1 à 30, **caractérisé en ce que**, au moyen des supports (83), en particulier des récepteurs (84) sur les corps de guidage (86), de la deuxième roue (82) lors de la rotation de la roue (82), chaque fois une carte (11) peut successivement être reprise respectivement d'un dispositif de maintien (32) sensiblement en direction tangentielle par rapport aux dispositifs de maintien (32) du support (31), en particulier du disque (38), être maintenue et être approchée de la bande (20) par la rotation de la roue (82), et être transférée à la bande (20) sensiblement parallèlement à la trajectoire de la bande.

32. Dispositif selon l'une quelconque des revendications 1 à 31, **caractérisé en ce que** le support (31), en particulier le disque (38), comporte vingt et un dispositifs de maintien (32).

33. Dispositif selon l'une quelconque des revendications 1 à 32, **caractérisé en ce que** la roue (62) du premier dispositif de transfert (60) et/ou la roue (82) du deuxième dispositif de transfert (80) comporte six supports (63 respectivement 83).
